# EUROPEAN PATENT SPECIFICATION

(11) **EP 4 390 389 B1**
(45) Date of publication and mention of the grant of the patent: **21.10.2026**
(21) Application number: 24167185.8
(22) Date of filing: 07.12.2012
(51) Int. Cl.: G01N 30/34, G01N 30/26, B01D 15/16, G01N 30/32, G01N 30/20

(54) **HYBRID GRADIENT DELIVERY SYSTEM AND OPERATION**
HYBRIDES GRADIENTENAUSGABESYSTEM UND BETRIEB DAVON
SYSTÈME ET FONCTIONNEMENT D'UNE FOURNITURE DE GRADIENT HYBRIDE

(30) Priority: 14.12.2011 US 201161570446 P
(43) Date of publication of application: 26.06.2024
(62) Document number(s) of the earlier application(s) in accordance with Art. 76 EPC: 12858173.3 / 2 791 666
(73) Proprietor: Waters Technologies Corporation, Milford, MA 01757 (US)
(72) Inventor: LUONGO, Joseph A., Walpole, MA 02081 (US); DOBBS, Craig Hamilton, Mendon, MA 01756 (US)
(74) Representative: Forresters IP LLP

(56) References cited:
- EP-A2- 0 467 665
- WO-A1-2010/030723
- WO-A1-2011/085353
- US-A- 4 437 812
- US-A- 5 158 675
- US-A- 5 630 706

## Description

### RELATED APPLICATION

This application claims the benefit of and priority to co-pending U.S. provisional application no. 61/570,446, filed December 14, 2011, titled "Hybrid Gradient Delivery System and Operation".

### FIELD OF THE INVENTION

The invention relates generally to liquid chromatography systems. More specifically, the invention relates to hybrid gradient delivery systems that combine aspects of high-pressure gradient systems and low-pressure gradient systems.

### BACKGROUND

Chromatography is a set of techniques for separating a mixture into its constituents. In liquid chromatography systems, generally, one or more high-pressure pumps take in solvents and deliver a liquid solvent composition to a sample manager, where a sample awaits injection into the mixture. The sample is the material under analysis, examples of which include complex mixtures of proteins, protein precursors, protein fragments, reaction products, and other compounds, to list but a few. From the sample manager, the resulting liquid composition, comprised of the mixture of solvents and injected sample, moves to a point of use, such as a column of particulate matter. By passing the composition through the column, the various constituents in the sample separate from each other at different rates and thus elute from the column at different times. A detector receives the elution from the column and produces an output from which the identity and quantity of the analytes may be determined.

High-performance liquid chromatography (HPLC) uses two basic elution modes: isocratic elution and gradient elution. In the isocratic elution mode, the mobile phase, comprised of either a pure solvent or a mixture of solvents, remains the same throughout the chromatography run. In the gradient elution mode, the composition of the mobile phase changes during the separation. Creation of the gradient (i.e., changing mobile phase composition) entails the mixing of multiple solvents, the proportions of which change over time in accordance with a predetermined timetable. Some HPLC systems create the gradient under high pressure, by mixing the solvents downstream of the pumps. Such HPLC systems are also referred to herein as high-pressure gradient systems. Other HPLC systems create the gradient under low pressure, using a gradient proportioning valve to select from up to four solvents, mixing the multiple solvents in front of a single aspirating pump, and changing the proportions of the solvents over time. Such HPLC systems are also referred to herein as low-pressure gradient systems.

The decision between a high-pressure and a low-pressure gradient system involves a variety of tradeoffs, only a few of which are mentioned here. For one, high-pressure gradient systems have lesser dwell volumes than low-pressure gradient systems because the solvent mixing occurs after the pumps instead of before the intake side of the pump. However, because of the location of mixing, low-pressure gradient systems can produce a gradient with just one pump, whereas high-pressure gradient systems generally require one pump for each solvent. Hence, low-pressure gradient systems are more amenable than high-pressure gradient systems to tertiary and quaternary gradients, and are thus predominantly used for such chromatography applications, whereas high-pressure gradient systems are generally used for binary gradients.

Often, however, it is desirable to blend more than two solvents in a gradient, with a third solvent being a modifier, such as TFA (triflouroacetic acid), introduced at a constant percentage. Furthermore, it is easier to blend in a more concentrated mixture of the modifier to the total composition than to add the modifier to each of the other solvents at the desired lower concentration. For example, if 0.1% TFA is the desired concentration, it is much easier to produce a 1% concentration of TFA, and introduce it in 10% proportion to the other two solvents, than to mix a 0.1% concentration of TFA in each of the other two solvents. Hence, a low-pressure gradient system is generally used for chromatography runs to introduce the third modifier solvent instead of a high-pressure gradient system. Use of the low-pressure gradient system for this purpose, though, has disadvantages of an increased dwell volume (in comparison to a high-pressure gradient system) and limiting the maximum percentage of one of the two other solvents to 90%.

Prior art arrangements are known from WO 2010/030723, US 5360706 and US 5158675.

### SUMMARY

In one aspect, the invention features a solvent delivery system for use in a liquid chromatography system as recited by Claim 1. Further, preferable, features are presented in the dependent claims.

### BRIEF DESCRIPTION OF THE DRAWINGS

The above and further advantages of this invention may be better understood by referring to the following description in conjunction with the accompanying drawings, in which like numerals indicate like structural elements and features in various figures. The drawings are not necessarily to scale, emphasis instead being placed upon illustrating the principles of the invention.
FIG. 1 is a functional block diagram of an embodiment of a hybrid solvent delivery system for a liquid chromatography system, the hybrid solvent delivery system combining features of a high-pressure gradient system and a low-pressure gradient system.
FIG. 2 is a functional block diagram of another embodiment of a hybrid solvent delivery system.
FIG. 3 is a functional block diagram of another embodiment of a hybrid solvent delivery system.

### DETAILED DESCRIPTION

Solvent delivery systems described herein can be deemed hybrid systems because they combine features of a high-pressure gradient system with those of a low-pressure gradient system. As a hybrid, the solvent delivery systems function primarily as binary gradient systems having minimized dwell volume and flexibility for solvent selection.

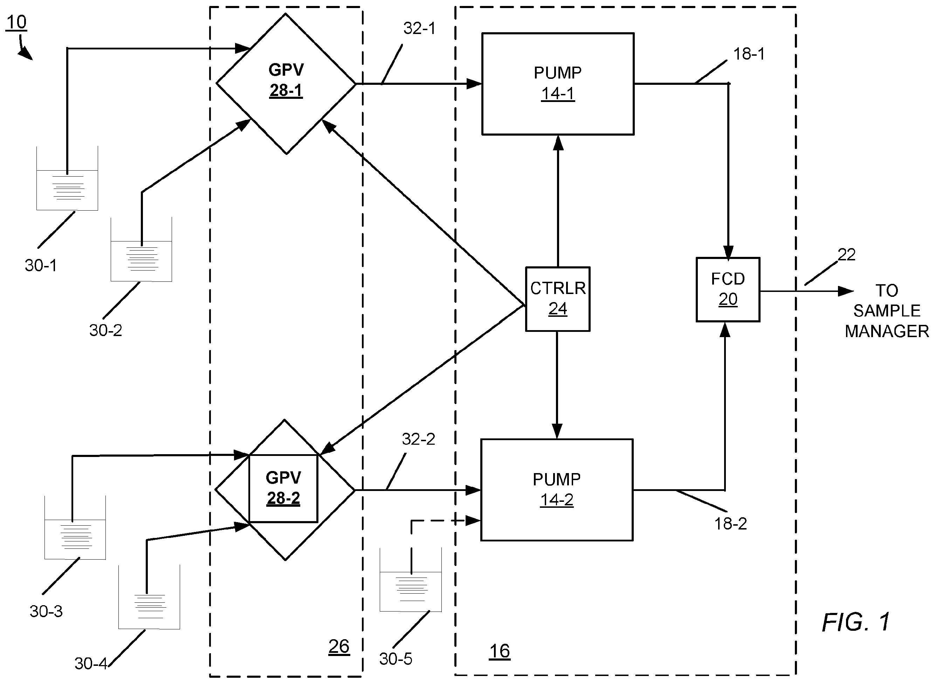

FIG. 1 shows an embodiment of a hybrid solvent delivery system 10 for producing and moving a solvent composition to a sample manager (not shown), also known as an autosampler, where a sample is introduced to the solvent composition. The features of a high-pressure gradient system adapted for use by the hybrid solvent delivery system 10, outlined by dashed box 16, include two pumps 14-1, 14-2 (generally, 14) operating in parallel. In brief overview, each pump 14-1, 14-2 includes a primary pumping actuator and an accumulator pumping actuator coupled in series. The pumps 14 can be of the type used in the 2545 Binary Gradient Module manufactured by Waters Corporation of Milford, MA.

The outlets of the pump 14-1, 14-2 are connected at the same or substantially the same mechanical location, here represented as a flow-combining device (FCD) 20. Example implementations of the flow-combining device 20 include, but are not limited to, a T-section and a mixer. Each pump 14-1, 14-2 moves a solvent stream 18-1, 18-2, respectively, at high pressure, to this flow-combining device 20, where the pressurized solvent streams 18-1, 18-2 combine to produce a pressurized solvent composition 22 that is delivered over time to the sample manager. A gradient controller 24 is in communication with the pumps 14 to manage the speed of each pump 14 in order to deliver more or less of each solvent stream 18-1, 18-2 over the course of the separation.

The features of the hybrid solvent delivery system 10 adapted from a low-pressure gradient system are shown within dashed box 26 and include two gradient proportioning valves (GPV) 28-1, 28-2 (generally, 28) operating in parallel. Each GPV 28 is in fluidic communication with up to four solvent reservoirs 30 (here, only two reservoirs per GPV are shown; the GPV 28-1 is in fluidic communication with solvent reservoirs 30-1, 30-2; and the GPV 28-2 is in fluidic communication with solvent reservoirs 30-3, 30-4). In addition, each GPV 28 is in fluidic communication with one of the pumps 14; the pump 14-1 acquires the low-pressure gradient stream 32-1 from the GPV 28-1, and the pump 14-2 acquires the low-pressure gradient stream 32-2 from GPV 28-2.

Each GPV 28 includes an inlet for each reservoir 30, an inlet valve (not shown) for controlling each flow of fluid being drawn into one of the inlets, and a common outlet through which fluid flows from the GPV 28 to one of the pumps 14. A conduit for transporting fluid, for example, a tube, extends from each reservoir 30 to one of the inlets of the GPV 28 and from the outlet of the GPV 28 to the intake side of the pump 14. An example implementation of a gradient proportioning valve is described in U.S. Patent No. 5,862,832, issued January 26, 1999.

The gradient controller 24 is in communication with the GPVs 28 to actuate their individual valves sequentially at the appropriate times, thereby managing the intake of fluid from the reservoirs 30 for mixing in desired proportions and producing low-pressure gradient streams 32 over time. From solvent reservoirs 30-1, 30-2, the GPV 28-1 produces low-pressure gradient stream 32-1, and from solvent reservoirs 30-3, 30-4, the GPV 28-2 produces low-pressure gradient stream 32-2. These gradient streams 32 are produced ahead of the pumps 14, and thus under low pressure.

During operation, the pump 14-1 draws and pressurizes the low-pressure gradient stream 32-1 produced by the GPV 28-1, and moves the resulting pressurized low-pressure gradient stream 18-1 to the flow-combining device 20, while the pump 14-2 draws and pressurizes the low-pressure gradient stream 32-2 produced by the GPV 28-2, and moves the resulting pressurized low-pressure gradient stream 18-2 to the flow-combining device 20, where the two pressurized low-pressure gradient streams 18-1, 18-2 combine to produce the pressurized solvent stream 22. Because the flow-combining device 20 is downstream of the pumps 14 the solvent stream 22 is produced at high pressure (e.g., in the range between 5000 - 15000 psi). As used herein, the phrase "pressurized low-pressure gradient stream" refers to a low-pressure gradient stream that is produced by a GPV and subsequently pressurized to a high pressure by a pump 14.

As an illustration of the operation, consider for example that solvent reservoir 30-1 contains water, solvent reservoir 30-2 contains 1% TFA in water, solvent reservoir 30-3 contains solvent B, and solvent reservoir 30-4 contains 1% TFA in solvent B. To achieve a solvent composition with 0.1% TFA modifier, the gradient controller 24 can control the GPV 28-1 to take a 90% proportion of solvent reservoir 30-1 (water) and a 10% proportion of solvent reservoir 30-2 (1% TFA in water) to produce a low-pressure gradient stream 32-1 of 0.1% TFA in water. In addition, the gradient controller 24 can control the GPV 28-2 to take a 90% proportion of solvent reservoir 30-3 (solvent B) and a 10% proportion of solvent reservoir 30-4 (1% TFA in solvent B) to produce a low-pressure gradient stream 32-2 of 0.1% TFA in solvent B. The pumps 14 draw and pressurize the low-pressure gradient streams 32-1, 32-2, and combine the resulting pressurized low-pressure gradient streams 18-1, 18-2 to produce a pressurized solvent stream 22 comprised of water, solvent B, and 0.1% TFA. The maximum achievable proportion of solvent B is 100%.

In an alternative embodiment, the hybrid solvent delivery system can have one GPV 28 only. For example, consider that GPV 28-2 and the solvents 30-3, 30-4 are not part of the hybrid solvent delivery system 10 shown in FIG. 1, and that the pump 14-2 is instead in direct fluidic communication with a solvent reservoir 30-5. During operation of this embodiment, the pump 14-1 draws and pressurizes the low-pressure gradient stream 32-1 produced by the GPV 28-1, and moves the resulting pressurized low-pressure gradient stream 32-1 to the flow-combining device 20, while the pump 14-2 draws, pressurizes, and moves solvent from reservoir 30-5 to the flow-combining device 20, where the pressurized low-pressure gradient stream 18-1 combines with the solvent 30-5. If the pump 14-2 is turned off, any of the embodiments of the hybrid solvent delivery system 10 can be adapted to operate like a conventional low-pressure gradient system.

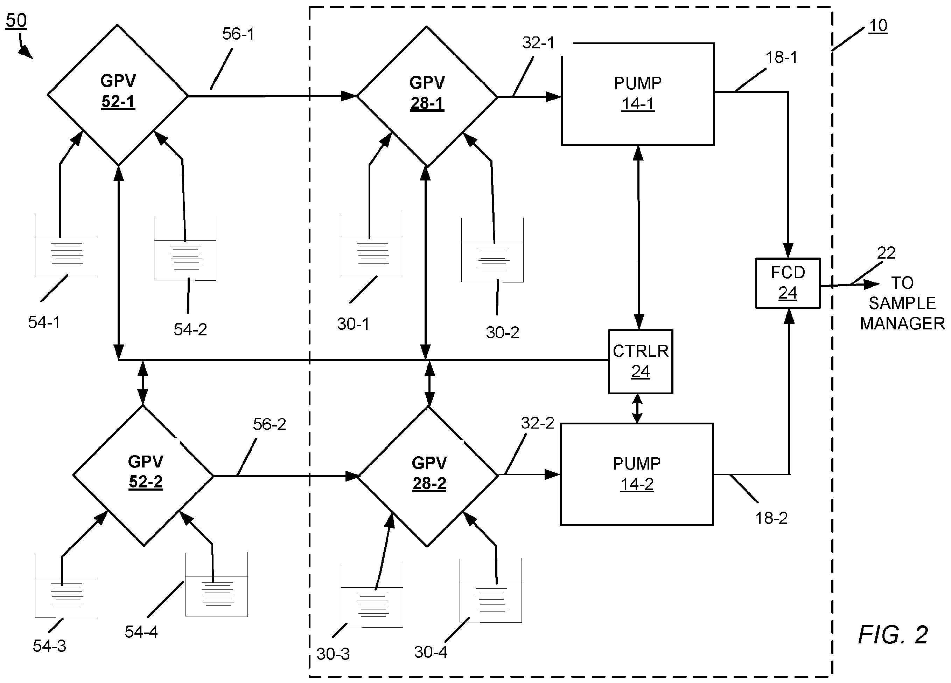

FIG. 2 shows another embodiment of a hybrid solvent delivery system 50, which adds a second stage of GPVs 52 to the hybrid solvent delivery system 10 of FIG. 1. More specifically, the hybrid solvent delivery system 50 includes a GPV 52-1 in fluidic communication with a plurality of solvent reservoirs 54-1, 54-2 and a GPV 52-2 in fluidic communication with a plurality of solvent reservoirs 54-3, 54-4. The outlet of GPV 52-1 is in fluidic communication with one of the inlets of GPV 28-1, while the outlet of GPV 52-2 is in fluidic communication with one of the inlets of GPV 28-2. The gradient controller 24 is in communication with the GPVs 52 to manage the intake of fluid from the reservoirs 54 for mixing in desired proportions and producing low-pressure gradient streams 56-1, 56-2 (generally, 56) over time. From solvent reservoirs 54-1, 54-2, the GPV 52-1 produces low-pressure gradient stream 56-1, and from solvent reservoirs 54-3, 54-4, the GPV 52-2 produces low-pressure gradient stream 56-2.

During operation, the low-pressure gradient stream 32-1 produced by the GPV 28-1 includes a proportion of the low-pressure gradient stream 56-1 produced by the GPV 52-1. The pump 14-1 draws and pressurizes the low-pressure gradient stream 32-1, and moves the resulting pressurized low-pressure gradient stream 18-1 to the flow-combining device 20. Concurrently, the GPV 28-2 produces the low-pressure gradient stream 32-2, which includes a proportion of the low-pressure gradient stream 56-2 produced by the GPV 56-2. The pump 14-2 draws and pressurizes the low-pressure gradient stream 32-2, and moves the resulting pressurized low-pressure gradient stream 18-2 to the flow-combining device 20, where the two pressurized low-pressure gradient streams 18-1, 18-2 combine to produce the pressurized solvent stream 22. In one embodiment, the gradient controller 24 centrally controls the various compositions of each low-pressure gradient stream 32, 56 and the resulting high-pressure gradient stream (i.e., solvent stream 22). In other embodiments, the gradient controller 24 includes a plurality of decentralized controllers that intercommunicate and manage the various compositions in fashion.

In alternative embodiments, the hybrid solvent delivery system 50 can have one second-stage GPV 52 only or one second-stage GPV 52 and one first-stage GPV 28. For example, for one alternative the GPV 52-2 and the solvents 54-3, 54-4 are not part of the hybrid solvent delivery system 50 shown in FIG. 2; in another example alternative, both the GPV 52-2 and GPV 28-2 are not part of the hybrid solvent delivery system 50. Again, if the pump 14-2 is turned off, any of the embodiments of the hybrid solvent delivery system 50 can be adapted to operate like a conventional low-pressure gradient system.

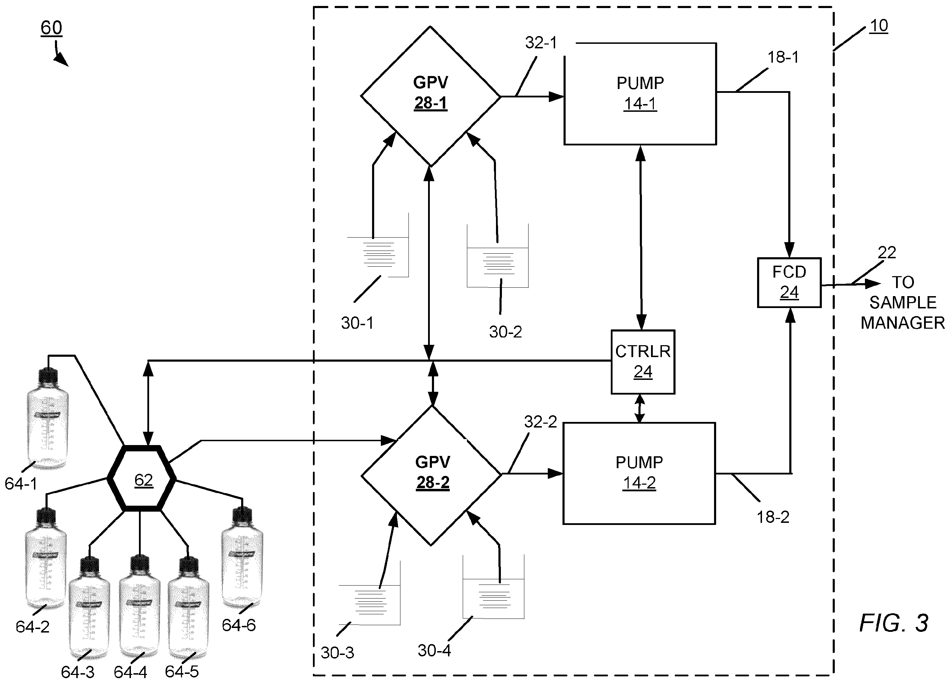

FIG. 3 shows another embodiment of a hybrid solvent delivery system 60, which fluidically connects a switch valve 62 to one of the GPVs 28 of the hybrid solvent delivery system 10 of FIG. 1. More specifically, the hybrid solvent delivery system 60 includes a switch valve 62 in fluidic communication with a plurality of solvent bottles (or reservoirs) 64-1, 64-2, 64-3, 64-4, 64-5, and 64-6. In this example, the outlet of the switch valve 62 is in fluidic communication with one of the inlets of the GPV 28-2. The gradient controller 24 is in communication with the switch valve 62 to select one of the inlets of the switch valve 62, and, thus, the particular solvent bottle 64 from which to draw solvent.

From the solvent drawn through the switch valve 62 and from solvent reservoirs 30-3, 30-4, the GPV 28-2 produces the low-pressure gradient stream 32-2. The pump 14-1 draws and pressurizes the low-pressure gradient stream 32-1 produced by the GPV 28-1 and moves the resulting pressurized low-pressure gradient stream 18-1 to the flow-combining device 20, while the pump 14-2 draws and pressurizes the low-pressure gradient stream 32-2, and moves the resulting pressurized low-pressure gradient stream 18-2, which includes the solvent from the selected solvent bottle 64, to the flow-combining device 20, where the pressurized low-pressure gradient streams 18-1, 18-2 combine.

In like fashion, another switch valve and set of solvent bottles can be fluidically connected to an inlet of the GPV 28-1 instead of or in combination with the switch valve 62 and solvent bottles 64 connected to the GPV 28-2. The embodiments of FIG. 3 are merely illustrative examples of the varying complexity that can be built into a hybrid solvent delivery system.

While the invention has been shown and described with reference to specific preferred embodiments, it should be understood by those skilled in the art that various changes in form and detail may be made therein without departing from the scope of the invention as defined by the following claims.

## Claims

1. A solvent delivery system (10, 50, 60) for use in a liquid chromatography system, comprising:
a first gradient proportioning valve (28-1) in fluidic communication with a first plurality of sources of solvent (30-1, 30-2) configured to produce from a mixture of proportions of the first plurality of solvents a first low-pressure gradient stream (32-1), the proportions of the first plurality of sources of solvent (30-1, 30-2) forming the first low-pressure gradient stream (32-1) changing over time in accordance with a predetermined timetable;
a first pump (14-1) in fluidic communication with an outlet of the first gradient proportioning valve (28-1) configured to receive and pressurize the first low-pressure gradient stream for forming a first pressurized gradient stream (18-1) and including an output connected to a flow-combining device (20) to move the first pressurized gradient stream (18-1) to the flow-combining device (20); and
a second pump (14-2) operating in parallel with the first pump (14-1), the second pump (14-2) including an outlet connected to the flow-combining device (24) and configured to move a pressurized solvent stream (18-2) to the flow-combining device (20) where the pressurized solvent stream (18-2) combines with the first pressurized gradient stream (18-1) to produce a high-pressure gradient stream (22),
**characterized in that** said first pump is in direct fluidic communication with said first gradient proportioning valve, and **in that** the second pump is not connected to said first gradient proportioning valve.

2. The solvent delivery system of claim 1, wherein the second pump (14-2) is in direct fluidic communication with a solvent reservoir (30-5).

3. The solvent delivery system of claim 1, further comprising:
a controller (24) in communication with the first pump (14-1), the second pump (14-2), and the first gradient proportioning valve (28-1), the controller (24) centrally controlling operation of the first pump (14-1) and the first gradient proportioning valve (28-1) at times to determine a composition of the first low-pressure gradient stream (32-1) and a composition of the high-pressure gradient stream (22) over time.

4. The solvent delivery system of claim 1, wherein the first plurality of sources of solvent (30-1, 30-2) are a first plurality of solvent reservoirs and the first gradient proportioning valve (28-1) is in direct fluidic communication with the first plurality of solvent reservoirs.

5. The solvent delivery system of claim 4, wherein the first gradient proportioning valve (28-1) includes an inlet for each of the first plurality of solvent reservoirs.

6. The solvent delivery system of claim 1, further comprising:
a second gradient proportioning valve (28-2) in fluidic communication with a second plurality of sources of solvent (30-3, 30-4), the second gradient proportioning valve (28-2) configured to produce a second low-pressure gradient stream (32-2) from a mixture of proportions of the second plurality of sources of solvent (30-3, 30-4), the proportions of the second plurality of sources of solvent (30-3, 30-4) forming the second low-pressure gradient stream changing over time in accordance with a second predetermined timetable, wherein the second pump (14-2) is in direct fluidic communication with an outlet of the second gradient proportioning valve (28-2)and configured to receive and pressurize the second low-pressure gradient stream (32-2) forming a second pressurized gradient stream, which comprises the pressurized solvent stream (18-2).

7. The solvent delivery system of claim 6, further comprising:
a controller (24) in communication with the first pump (14-1), the second pump (14-2), and the first gradient proportioning valve (28-1), the controller (24) centrally controlling operation of the first pump (14-1) and the first gradient proportioning valve (28-1) at times to determine a composition of the first low-pressure gradient stream (32-1) and a composition of the high-pressure gradient stream (22) over time.

8. The solvent delivery system of claim 6, further comprising:
a first switch valve (62) in fluidic communication with the first gradient proportioning valve (21-1) and with a third plurality of sources of solvent (64), the first switch valve being configured to provide a fluidic path for a selected source of the third plurality of sources of solvent, wherein one of the sources of the first plurality of sources of solvent used by the first gradient proportioning valve to produce the low-pressure gradient stream comprises the selected source of the third plurality of sources of solvent.

9. The solvent delivery system of claim 8, further comprising:
a second switch valve (62) in fluidic communication with the second gradient proportioning valve (28-2) and with a fourth plurality of sources of solvent (64), the second switch valve being configured to provide a fluidic path for a selected source of the fourth plurality of sources of solvent, wherein one of the sources of the second plurality of sources of solvent used by the second gradient proportioning valve to produce the low-pressure gradient stream comprises the selected source of the fourth plurality of sources of solvent.

10. The solvent delivery system of claim 9, wherein the first plurality of sources of solvent (30-1, 30-2) are a first plurality of solvent reservoirs and the first gradient proportioning valve is in direct fluidic communication with the first plurality of solvent reservoirs.

11. The solvent delivery system of claim 10, wherein the first gradient proportioning valve (28-1) includes an inlet for each of the first plurality of solvent reservoirs.

12. The solvent delivery system of claim 11, wherein the first gradient proportioning valve includes an inlet valve for controlling flow of fluid being drawn into one of the inlets for the first plurality of solvent reservoirs.

13. The solvent delivery system of claim 6, wherein the first gradient proportioning valve includes a common outlet through which fluid flows from the first gradient proportioning valve to the first pump.

## Patentansprüche

1. Lösungsmittelzufuhrsystem (10, 50, 60) zur Verwendung in einem Flüssigkeitschromatographiesystem, umfassend:
ein erstes Gradientenproportionierventil (28-1) in Fluidverbindung mit einer ersten Vielzahl von Lösungsmittelquellen (30-1, 30-2), das konfiguriert ist, um aus einer Mischung von Anteilen der ersten Vielzahl von Lösungsmitteln einen ersten Niederdruck-Gradientenstrom (32-1) zu erzeugen, wobei sich die Anteile der ersten Vielzahl von Lösungsmittelquellen (30-1, 30-2), die den ersten Niederdruck-Gradientenstrom (32-1) bilden, im Laufe der Zeit gemäß einem vorbestimmten Zeitplan ändern;
eine erste Pumpe (14-1) in Fluidverbindung mit einem Auslass des ersten Gradientenproportionierventils (28-1), die konfiguriert ist, um den ersten Niederdruck-Gradientenstrom aufzunehmen und mit Druck zu beaufschlagen, um einen ersten druckbeaufschlagten Gradientenstrom (18-1) zu bilden, und die einen Ausgang einschließt, der mit einer Strömungszusammenführungsvorrichtung (20) verbunden ist, um den ersten druckbeaufschlagten Gradientenstrom (18-1) zu der Strömungszusammenführungsvorrichtung (20) zu fördern; und
eine zweite Pumpe (14-2), die parallel zu der ersten Pumpe (14-1) arbeitet, wobei die zweite Pumpe (14-2) einen Auslass einschließt, der mit der Strömungszusammenführungsvorrichtung (24) verbunden ist, und konfiguriert ist, um einen druckbeaufschlagten Lösungsmittelstrom (18-2) zu der Strömungszusammenführungsvorrichtung (20) zu fördern, wo der druckbeaufschlagte Lösungsmittelstrom (18-2) mit dem ersten druckbeaufschlagten Gradientenstrom (18-1) zusammenfließt, um einen Hochdruck-Gradientenstrom (22) zu erzeugen,
**dadurch gekennzeichnet, dass** die erste Pumpe in direkter Fluidverbindung mit dem ersten Gradientenproportionierventil steht, und **dass** die zweite Pumpe nicht mit dem ersten Gradientenproportionierventil verbunden ist.

2. Lösungsmittelzufuhrsystem nach Anspruch 1, wobei die zweite Pumpe (14-2) in direkter Fluidverbindung mit einem Lösungsmittelreservoir (30-5) steht.

3. Lösungsmittelzufuhrsystem nach Anspruch 1, ferner umfassend:
eine Steuerung (24) in Verbindung mit der ersten Pumpe (14-1), der zweiten Pumpe (14-2) und dem ersten Gradientenproportionierventil (28-1), wobei die Steuerung (24) den Betrieb der ersten Pumpe (14-1) und des ersten Gradientenproportionierventils (28-1) zeitweise zentral steuert, um eine Zusammensetzung des ersten Niederdruck-Gradientenstroms (32-1) und eine Zusammensetzung des Hochdruck-Gradientenstroms (22) im Laufe der Zeit zu bestimmen.

4. Lösungsmittelzufuhrsystem nach Anspruch 1, wobei die erste Vielzahl von Lösungsmittelquellen (30-1, 30-2) eine erste Vielzahl von Lösungsmittelreservoirs ist und das erste Gradientenproportionierventil (28-1) in direkter Fluidverbindung mit der ersten Vielzahl von Lösungsmittelreservoirs steht.

5. Lösungsmittelzufuhrsystem nach Anspruch 4, wobei das erste Gradientenproportionierventil (28-1) einen Einlass für jedes der ersten Vielzahl von Lösungsmittelreservoirs einschließt.

6. Lösungsmittelzufuhrsystem nach Anspruch 1, ferner umfassend:
ein zweites Gradientenproportionierventil (28-2) in Fluidverbindung mit einer zweiten Vielzahl von Lösungsmittelquellen (30-3, 30-4), wobei das zweite Gradientenproportionierventil (28-2) konfiguriert ist, um einen zweiten Niederdruck-Gradientenstrom (32-2) aus einer Mischung von Anteilen der zweiten Vielzahl von Lösungsmittelquellen (30-3, 30-4) zu erzeugen, wobei sich die Anteile der zweiten Vielzahl von Lösungsmittelquellen (30-3, 30-4), die den zweiten Niederdruck-Gradientenstrom bilden, gemäß einem zweiten vorbestimmten Zeitplan im Laufe der Zeit ändern, wobei die zweite Pumpe (14-2) in direkter Fluidverbindung mit einem Auslass des zweiten Gradientenproportionierventils (28-2) steht und konfiguriert ist, um den zweiten Niederdruck-Gradientenstrom (32-2) aufzunehmen und mit Druck zu beaufschlagen, um einen zweiten unter Druck stehenden Gradientenstrom zu bilden, umfassend den druckbeaufschlagten Lösungsmittelstrom (18-2).

7. Lösungsmittelzufuhrsystem nach Anspruch 6, ferner umfassend:
eine Steuerung (24) in Verbindung mit der ersten Pumpe (14-1), der zweiten Pumpe (14-2) und dem ersten Gradientenproportionierventil (28-1), wobei die Steuerung (24) den Betrieb der ersten Pumpe (14-1) und des ersten Gradientenproportionierventils (28-1) zeitweise zentral steuert, um eine Zusammensetzung des ersten Niederdruck-Gradientenstroms (32-1) und eine Zusammensetzung des Hochdruck-Gradientenstroms (22) im Laufe der Zeit zu bestimmen.

8. Lösungsmittelzufuhrsystem nach Anspruch 6, ferner umfassend:
ein erstes Schaltventil (62) in Fluidverbindung mit dem ersten Gradientenproportionierventil (21-1) und mit einer dritten Vielzahl von Lösungsmittelquellen (64), wobei das erste Schaltventil konfiguriert ist, um einen Fluidpfad für eine ausgewählte Quelle der dritten Vielzahl von Lösungsmittelquellen bereitzustellen, wobei eine der Quellen der ersten Vielzahl von Lösungsmittelquellen, die von dem ersten Gradientenproportionierventil verwendet wird, um den Niederdruck-Gradientenstrom zu erzeugen, die ausgewählte Quelle der dritten Vielzahl von Lösungsmittelquellen umfasst.

9. Lösungsmittelzufuhrsystem nach Anspruch 8, ferner umfassend:
ein zweites Schaltventil (62) in Fluidverbindung mit dem zweiten Gradientenproportionierventil (28-2) und mit einer vierten Vielzahl von Lösungsmittelquellen (64), wobei das zweite Schaltventil konfiguriert ist, um einen Fluidpfad für eine ausgewählte Quelle der vierten Vielzahl von Lösungsmittelquellen bereitzustellen, wobei eine der Quellen der zweiten Vielzahl von Lösungsmittelquellen, die von dem zweiten Gradientenproportionierventil verwendet wird, um den Niederdruck-Gradientenstrom zu erzeugen, die ausgewählte Quelle der vierten Vielzahl von Lösungsmittelquellen umfasst.

10. Lösungsmittelzufuhrsystem nach Anspruch 9, wobei die erste Vielzahl von Lösungsmittelquellen (30-1, 30-2) eine erste Vielzahl von Lösungsmittelreservoirs sind und das erste Gradientenproportionierventil in direkter Fluidverbindung mit der ersten Vielzahl von Lösungsmittelreservoirs steht.

11. Lösungsmittelzufuhrsystem nach Anspruch 10, wobei das erste Gradientenproportionierventil (28-1) einen Einlass für jedes der ersten Vielzahl von Lösungsmittelreservoirs einschließt.

12. Lösungsmittelzufuhrsystem nach Anspruch 11, wobei das erste Gradientenproportionierventil ein Einlassventil zum Steuern des Flusses von Fluid einschließt, das in einen der Einlässe für die erste Vielzahl von Lösungsmittelreservoirs gesaugt wird.

13. Lösungsmittelzufuhrsystem nach Anspruch 6, wobei das erste Gradientenproportionierventil einen gemeinsamen Auslass einschließt, durch den Fluid von dem ersten Gradientenproportionierventil zu der ersten Pumpe strömt.

## Revendications

1. Système de distribution de solvant (10, 50, 60) pour une utilisation dans un système de chromatographie en phase liquide, comprenant :
une première vanne de dosage de gradient (28-1) en communication fluidique avec une première pluralité de sources de solvant (30-1, 30-2) conçue pour produire à partir d'un mélange de proportions de la première pluralité de solvants un premier flux de gradient basse pression (32-1), les proportions de la première pluralité de sources de solvant (30-1, 30-2) formant le premier flux de gradient basse pression (32-1) changeant au fil du temps conformément à un programme prédéterminé ;
une première pompe (14-1) en communication fluidique avec une sortie de la première vanne de dosage de gradient (28-1) conçue pour recevoir et mettre sous pression le premier flux de gradient basse pression pour former un premier flux de gradient sous pression (18-1) et comportant une sortie raccordée à un dispositif de combinaison d'écoulement (20) pour déplacer le premier flux de gradient sous pression (18-1) vers le dispositif de combinaison d'écoulement (20) ; et
une seconde pompe (14-2) fonctionnant en parallèle avec la première pompe (14-1), la seconde pompe (14-2) comportant une sortie raccordée au dispositif de combinaison d'écoulement (24) et conçue pour déplacer un flux de solvant sous pression (18-2) vers le dispositif de combinaison d'écoulement (20) où le flux de solvant sous pression (18-2) se combine avec le premier flux de gradient sous pression (18-1) pour produire un flux de gradient haute pression (22),
**caractérisé en ce que** ladite première pompe est en communication fluidique directe avec ladite première vanne de dosage de gradient, et **en ce que** la seconde pompe n'est pas raccordée à ladite première vanne de dosage de gradient.

2. Système de distribution de solvant selon la revendication 1, dans lequel la seconde pompe (14-2) est en communication fluidique directe avec un réservoir de solvant (30-5).

3. Système de distribution de solvant selon la revendication 1, comprenant en outre :
un dispositif de commande (24) en communication avec la première pompe (14-1), la seconde pompe (14-2) et la première vanne de dosage de gradient (28-1), le dispositif de commande (24) commandant de manière centrale le fonctionnement de la première pompe (14-1) et de la première vanne de dosage de gradient (28-1) à certains moments pour déterminer une composition du premier flux de gradient basse pression (32-1) et une composition du flux de gradient haute pression (22) au fil du temps.

4. Système de distribution de solvant selon la revendication 1, dans lequel la première pluralité de sources de solvant (30-1, 30-2) sont une première pluralité de réservoirs de solvant et la première vanne de dosage de gradient (28-1) est en communication fluidique directe avec la première pluralité de réservoirs de solvant.

5. Système de distribution de solvant selon la revendication 4, dans lequel la première vanne de dosage de gradient (28-1) comporte une entrée pour chacun de la première pluralité de réservoirs de solvant.

6. Système de distribution de solvant selon la revendication 1, comprenant en outre :
une seconde vanne de dosage de gradient (28-2) en communication fluidique avec une deuxième pluralité de sources de solvant (30-3, 30-4), la seconde vanne de dosage de gradient (28-2) étant conçue pour produire un second flux de gradient basse pression (32-2) à partir d'un mélange de proportions de la deuxième pluralité de sources de solvant (30-3, 30-4), les proportions de la deuxième pluralité de sources de solvant (30-3, 30-4) formant le second flux de gradient basse pression changeant au fil du temps conformément à un second programme prédéterminé, dans lequel la seconde pompe (14-2) est en communication fluidique directe avec une sortie de la seconde vanne de dosage de gradient (28-2) et conçue pour recevoir et mettre sous pression le second flux de gradient basse pression (32-2) formant un second flux de gradient sous pression, qui comprend le flux de solvant sous pression (18-2).

7. Système de distribution de solvant selon la revendication 6, comprenant en outre :
un dispositif de commande (24) en communication avec la première pompe (14-1), la seconde pompe (14-2) et la première vanne de dosage de gradient (28-1), le dispositif de commande (24) commandant de manière centrale le fonctionnement de la première pompe (14-1) et de la première vanne de dosage de gradient (28-1) à certains moments pour déterminer une composition du premier flux de gradient basse pression (32-1) et une composition du flux de gradient haute pression (22) au fil du temps.

8. Système de distribution de solvant selon la revendication 6, comprenant en outre :
une première vanne de commutation (62) en communication fluidique avec la première vanne de dosage de gradient (21-1) et avec une troisième pluralité de sources de solvant (64), la première vanne de commutation étant conçue pour fournir un trajet fluidique pour une source sélectionnée de la troisième pluralité de sources de solvant, dans lequel l'une des sources de la première pluralité de sources de solvant utilisée par la première vanne de dosage de gradient pour produire le flux de gradient basse pression comprend la source sélectionnée de la troisième pluralité de sources de solvant.

9. Système de distribution de solvant selon la revendication 8, comprenant en outre :
une seconde vanne de commutation (62) en communication fluidique avec la seconde vanne de dosage de gradient (28-2) et avec une quatrième pluralité de sources de solvant (64), la seconde vanne de commutation étant conçue pour fournir un trajet fluidique pour une source sélectionnée de la quatrième pluralité de sources de solvant, dans lequel l'une des sources de la deuxième pluralité de sources de solvant utilisée par la seconde vanne de dosage de gradient pour produire le flux de gradient basse pression comprend la source sélectionnée de la quatrième pluralité de sources de solvant.

10. Système de distribution de solvant selon la revendication 9, dans lequel la première pluralité de sources de solvant (30-1, 30-2) est une première pluralité de réservoirs de solvant et la première vanne de dosage de gradient est en communication fluidique directe avec la première pluralité de réservoirs de solvant.

11. Système de distribution de solvant selon la revendication 10, dans lequel la première vanne de dosage de gradient (28-1) comporte une entrée pour chacun de la première pluralité de réservoirs de solvant.

12. Système de distribution de solvant selon la revendication 11, dans lequel la première vanne de dosage de gradient comporte une vanne d'entrée pour commander l'écoulement de fluide aspiré dans l'une des entrées pour la première pluralité de réservoirs de solvant.

13. Système de distribution de solvant selon la revendication 6, dans lequel la première vanne de dosage de gradient comporte une sortie commune à travers laquelle le fluide s'écoule de la première vanne de dosage de gradient vers la première pompe.
